(19) Europäisches Patentamt
European Patent Office
Office européen des brevets

(11) **EP 3 515 199 B1**

(12) **EUROPEAN PATENT SPECIFICATION**

(45) Date of publication and mention
of the grant of the patent:
**13.12.2023 Bulletin 2023/50**

(21) Application number: **17772634.6**

(22) Date of filing: **13.09.2017**

(51) International Patent Classification (IPC):
*A23D 7/02* (2006.01)    *A23D 7/00* (2006.01)
*A23G 1/36* (2006.01)    *A23G 1/52* (2006.01)
*A23G 3/34* (2006.01)    *A23G 3/52* (2006.01)
*A23G 3/54* (2006.01)    *A23G 3/40* (2006.01)
*A23G 1/54* (2006.01)    *A21D 13/00* (2017.01)
*A21D 13/36* (2017.01)    *A21D 13/38* (2017.01)
*A23L 7/122* (2016.01)

(52) Cooperative Patent Classification (CPC):
**A23G 1/36; A21D 13/36; A21D 13/38; A23D 7/003;
A23G 1/52; A23G 1/545; A23G 3/40; A23G 3/52;
A23G 3/54; A23L 7/122;** A21D 13/19;
A23G 2200/08; A23G 2200/14; A23G 2220/02;
A23G 2220/22

(86) International application number:
**PCT/EP2017/073070**

(87) International publication number:
**WO 2018/054746 (29.03.2018 Gazette 2018/13)**

(54) **AERATED FOOD COMPOSITION**

BELÜFTETE NAHRUNGSMITTELZUSAMMENSETZUNG

COMPOSITION ALIMENTAIRE AÉRÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **22.09.2016 EP 16190121
22.09.2016 EP 16190093
07.06.2017 EP 17174757**

(43) Date of publication of application:
**31.07.2019 Bulletin 2019/31**

(73) Proprietor: **Société des Produits Nestlé S.A.
1800 Vevey (CH)**

(72) Inventors:
• **RAY, Joydeep
1066 Epalinges Vaud (CH)**

• **DESTRIBATS, Mathieu, Julien
1092 Belmont-sur-Lausanne Vaud (CH)**
• **ARUMEEL-DAUPHIN, Liisi
Vologda 160000 (RU)**

(74) Representative: **Slaven, John William
Société des Produits Nestlé S.A.
Avenue Nestlé 55
1800 Vevey (CH)**

(56) References cited:
EP-A1- 2 443 935       EP-A1- 3 005 875
WO-A1-2010/055033    WO-A1-2017/055101
US-A1- 2011 039 008    US-B1- 6 737 100

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to an aerated food composition comprising a high-melting fat, a medium-melting fat, and a low-melting fat. A further aspect of the invention is a method of manufacturing an aerated food composition comprising letting the composition perform a first crystallization event; aerating the composition; and controlling the temperature of the aerated composition to allow a second crystallization event in the composition.

### Background of the Invention

Aerated compositions are of particular interest to the food industry, having the potential to provide new textures and sensory properties. There is increasing concern about the amount of fat consumed in people's diet. Foaming fat-containing materials provides a method to maintain product volume whilst reducing the fat content.

The major difficulty in generating stable foam structures within fat-based systems as compared to water-based systems lies in the lack of suitable surfactants for forming stable interfaces between air and lipid. Those surfactants which have been proposed may not be suitable for stabilizing edible foams due to toxicity or unpleasant taste. As a consequence, the most common approach for obtaining stable foams in a fat-based matrix is by forming a rigid network in the bulk material, for example by forming a rigid network of crystals in a liquid fat-continuous phase or by rapidly cooling the lipid so as to solidify the bulk material. However, both of these approaches lead to constraints when processing the foam. Having a rigid network in the fat-continuous phase affects the ability of the foam to be pumped, deposited, or mixed with other components without destroying the stabilizing network leading to coalescence of bubbles. A foam stabilized by solidifying the bulk is generally unstable before solidification and so can only be maintained as a foam for a short period and cannot be subject to substantial shear forces during processing.

Aerated fat-based food compositions typically use a high proportion of harder fats to rapidly crystallize and so stabilize the aerated structure after processing, preventing a loss of volume during the prolonged fat crystallization process which, for softer fats, may continue long after the product has been wrapped. These harder fats have high saturated fatty acid (SFA) contents. Consumption of saturated fatty acids have been linked to increased levels of LDL cholesterol in the blood and heart diseases and so it would be advantageous to be able to reduce the consumption of saturated fatty acids. Mixing solid inclusions such as raisins or nut pieces into aerated food compositions presents a challenge. When mixing inclusions into aerated foam after aeration step, the foam tends to collapse due to mechanical processing. When inclusions are present before aeration, they break during aeration step because of the high shear and pressure applied in the pipes and mixing head. In consequence the machine blockages may occur and the end product may contain small broken inclusions (not bigger than 2mm). For these reasons it is difficult to add large (> 2mm sized) inclusions into aerated fillings. One way around this difficulty is to aerate by applying a vacuum as described in US2082313, but continuous vacuum processes are complex to engineer and costly to maintain. WO2017055101 A1 discloses a low saturated fatty acids fat composition for use in an aerated emulsion, such as a filling cream, wherein the composition comprises less than 35% by weight of saturated fatty acids based on the total weight of fatty acid residues; wherein the composition comprises from 2-8 % by weight C12:0 and from 12-15% by weight C16:0; and wherein the composition is whippable to a stable cream with water without the addition of stabilizers.

The challenges of producing fats which have the appropriate physical properties to be satisfactorily aerated has led many suppliers to offer interesterified fats for this purpose. Interesterification of vegetable oils may enhance the amount of saturated fatty acids at the 2-position. Fatty acids at the 2-position are biologically different from fatty acids at the 1 and 3 position because they are handled differently during digestion and metabolism. Some consumers are concerned that this may have a negative health impact, and would prefer to consume fats in their "natural" configuration.

Hence, there is a need in the industry to find better solutions to produce stable aerated fat-continuous food compositions, in particular edible fat foams which taste good and are made from natural ingredients. It would furthermore be advantageous to find solutions which do not require the use of interesterified fats. An object of the present invention is to improve the state of the art and to provide an improved solution to overcome at least some of the inconveniences described above or at least to provide a useful alternative. Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The object of the present invention is achieved by the subject matter of the independent claims. The dependent claims further develop the idea of the present invention.

## Summary of the invention

Accordingly, the present invention provides in a first aspect an aerated food composition having a continuous fat phase, the composition comprising between 20 and 60 wt.% of fat and between 40 and 80 wt.% of non-fat solids having a particle size distribution D90 of less than 250 μm, the fat comprising a high-melting fat, a medium-melting fat, and a low-melting fat, wherein the aerated composition comprises, on a total fat basis, less than 50 wt.% of saturated fatty acids, between 9 and 60 wt.% of monounsaturated fatty acid, and less than 30 wt.% of polyunsaturated fatty acid, and wherein the high-melting fat has a melting point between 35 °C and 80 °C, the medium-melting fat has a melting point between 15 °C and 30 °C and the low-melting fat has a melting point between -50 °C and 5 °C, prepared by a method comprising the steps: providing a composition comprising the non-fat solids and the fat, the continuous fat phase comprised within the composition being liquid; letting the composition perform a first crystallization event; aerating the composition; and controlling the temperature of the aerated composition to allow a second crystallization event in the composition.

In a further aspect, the invention relates to a method of manufacturing the aerated food composition of the first aspect, the method comprising the steps; providing a composition comprising the non-fat solids and the fat, the continuous fat phase comprised within the composition being liquid; letting the composition perform a first crystallization event; aerating the composition; and controlling the temperature of the aerated composition to allow a second crystallization event in the composition.

It has been surprisingly found by the inventors that a food composition comprising a high-melting fat, a medium-melting fat, and a low-melting fat provides excellent aeration properties at low levels of saturated fat. The resulting fat-phase crystallizes at two distinct temperatures during processing, leaving the low-melting fat in the liquid state. By initially cooling the liquid composition to a temperature at which a first fat crystallization event occurs and then whipping the composition, a stable foam is produced. The gas bubbles in the foam are found to be coated in fat crystals. The crystals jam together around the bubble, leading to mechanical stability and resisting bubble shrinkage. At this stage, the bulk remains soft, e.g. there is no rigid network of crystals in-between the bubbles. This allows the foam to be processed, for example pumped, deposited or mixed with inclusions, while the crystals wrapping the gas bubbles prevent significant loss of foam volume. Once the foam has been formed as required, for example deposited into moulds, it is then cooled to temperature at which a second crystallization event occurs. This second crystallization event builds a network in the fat phase, surprisingly developing a desired texture and stability despite the presence of un-solidified fat from the low-melting component. This low-melting component reduces the overall level of saturated fats in the composition.

## Brief Description of the Drawings

Figure 1 shows optical micrographs of aerated foams of compositions D-F, just after aeration (left column) and fat crystals coating the interfaces between bubbles in aerated foams diluted with oil (right column)

Figure 2 shows stability of aerated foam structures of compositions D-F, deposited without inclusions (left column), and with 10% fruit inclusions of 3 mm size (right column) after overnight storage at different temperatures (20, 28, 30, 34 °C)

Figure 3 shows optical micrographs of aerated filling recipes 2 from Example 4, just after aeration.

Figure 4 shows 1 week old aerated foams of filling recipes 1-3 stored at room temperature (approx. 20°C)

Figure 5 shows a differential scanning calorimeter melting thermogram of 1 week old aerated foams of filling recipes 1-3 stored at room temperature (approx. 20°C)

## Detailed Description of the invention

Consequently the present invention relates in part to an aerated food composition having a continuous fat phase, the composition comprising between 20 and 60 wt.% (for example between 20 and 55 wt.%, for example between 22 to 45 wt.%, for further example between 25 to 35 wt.%) of fat and between 40 and 80 wt.% (for example between 45 and 80 wt.%, for example between 55 to 78 wt.%, for further example between 65 to 75 wt.%) of non-fat solids having a particle size distribution D90 of less than 250 μm (for example less than 200 μm, for example less than 150 μm, for example between 30 and 220 μm, for further example between 50 and 150 μm), the fat comprising (for example consisting of) a high-melting fat, a medium-melting fat, and a low-melting fat, wherein the aerated composition comprises, on a total fat basis, less than 50 wt.% (for example less than 45 wt.%, for further example less than 40 wt.%) of saturated fatty acids, between 9 and 60 wt.% (for example between 15 and 50 wt.%) of monounsaturated fatty acid, and less than 30 wt.% of polyunsaturated fatty acid, and wherein the high-melting fat has a melting point between 35 °C and 80 °C (for example between 37 °C and 75 °C, for further example between 40 °C and 50 °C), the medium-melting fat has a melting point between 15 °C and 30 °C (for example between 18 °C and 25 °C) and the low-melting fat has a melting point between -50 °C and 5 °C. The aerated food composition is prepared by a method comprising the steps: providing a composition comprising the non-fat solids and the fat, the continuous fat phase comprised within the composition being liquid; letting the composition perform a first crystallization event; aerating the composition; and controlling the temperature of the aerated composition to allow a second crystallization event in the composition.

In an embodiment of the invention, the fat is not interesterified. In the context of the present invention, not being interesterified means that the fat according to the composition of the invention has not undergone a deliberate interesterification process. Small amounts of interesterification may incidentally occur during fat processing, for example during deodorization at high temperatures. The fat according to the composition of the invention may for example comprise less than 5 % interesterified triglycerides by weight of total fat in the composition, for example less than 2 % interesterified triglycerides by weight of total fat in the composition, for example less than 0.5 % interesterified triglycerides by weight of total fat in the composition.

Interesterified fat is a type of fat where the fatty acid residues have been moved from one triglyceride molecule to another, or from one position on the glycerol backbone to another. Saturated fatty acids are not common in the central "2 position" of natural triglycerides. They are more common in interesterified fats, where the interesterification process has re-arranged the positions of the fatty acids. The fat phase of the composition of the invention may have a ratio of SSU triglycerides to SUS triglycerides of less than 0.1, wherein S indicates a saturated fatty acid residue with 16 to 24 carbon atoms and U indicates an unsaturated fatty acid residue with 18 carbon atoms. The description SSU indicates a triglyceride with S in the 1 position, S in the 2 position and U in the 3 position of the glycerol backbone. (It should be noted that SSU and USS are equivalent in this context as the 1 and 3 positions are interchangeable.) Similarly SUS triglycerides have S in the 1 position, U in the 2 position and S in the 3 position of the glycerol backbone.

The aeration of fat based food compositions having less than 35 wt.% fat presents many technical challenges. Reducing the ratio of fat to non-fat particles in a material increases its viscosity. Highly viscous materials are difficult to aerate. A matrix material with high viscosity does not easily flow around the air bubbles to form a continuous coating of the bubbles as they are formed and grow. During processing of the resulting foam, a high viscosity requires higher pumping and mixing forces which can lead to foam destruction. Surprisingly the inventors have found that a food composition comprising a high-melting fat, a medium-melting fat, and a low-melting fat provides excellent aeration properties at low levels of fat. As previously discussed, the fat-phase of the food composition crystallizes at two distinct temperatures during processing. By whipping the composition after only the first fat crystallization event has occured, the continuous phase remains fluid enough for good aeration even when the fat content of the composition is low. In an embodiment, the invention provides an aerated food composition having a continuous fat phase, the composition comprising between 20 and 34 wt.% (for example between 22 and 33 wt.%, for example between 25 and 31 wt.%, for further example between 22 and 29 wt.%) of fat (for example non-interesterified fat) and between 66 and 80 wt.% (for example between 67 and 78 wt.%, for example between 69 to 75 wt.%, for further example between 71 and 78 wt.%) of non-fat solids having a particle size distribution D90 of less than 250 µm (for example less than 200 µm, for example less than 150 µm, for example between 30 and 220 µm, for further example between 50 and 150 µm), the fat (for example non-interesterified fat) comprising (for example consisting of) a high-melting fat, a medium-melting fat, and a low-melting fat, wherein the aerated composition comprises, on a total fat basis, less than 50 wt.% (for example less than 45 wt.%, for example less than 40 wt.%) of saturated fatty acids, between 9 and 60 wt.% (for example between 15 and 50 wt.%) of monounsaturated fatty acid, and less than 30 wt.% of polyunsaturated fatty acid, and wherein the high-melting fat has a melting point between 35 °C and 80 °C (for example between 37 °C and 75 °C, for further example between 40 °C and 50 °C), the medium-melting fat has a melting point between 15 °C and 30 °C (for example between 18 °C and 25 °C) and the low-melting fat has a melting point between -50 °C and 5 °C.

The aerated food composition may comprise 40 to 60 wt% of fat and 40 to 60 wt% of non-fat solids having a particle size distribution D90 of less than 100 microns.

In an embodiment, the fat according to the composition of the invention comprises fatty acids present in the following amounts, based on the total amount of fatty acids present in the fat being 100 weight parts:

($\alpha$, [alpha]) from 0 to 50 weight parts of SFA;
($\beta$ [beta]) from 9 to 50 weight parts of MUFA, and
($\gamma$ [gamma]) from 0 to 30 weight parts of PUFA;

where the sum of the constituents ($\alpha$, [alpha]); ($\beta$ [beta]) and ($\gamma$ [gamma]) of fatty acids does not exceed 100 weight parts.

If the lower end of the range amount given for a component herein is stated as zero (0) this means that the component is optional and may not be present.

In the context of the present invention, the fatty acids comprised within the fat phase are esterified onto a glycerol backbone to form triglycerides. That is to say, the fatty acids are components of the triglycerides. The content of free fatty acids (i.e. not parts of triglyceride molecules) in the aerated food composition of the invention is low, for example the level of free fatty acids may be below 2 wt.%, for further example below 1 wt.%.

In an embodiment, 40 to 100 weight parts of the total amount of fat comprised in the composition of the invention comprise at least the following types of triglycerides in the following amounts:

(a) from 15 to 35 weight parts of S-M-M;
(b) from 10 to 30 weight parts of S-M-P;
(c) from 15 to 35 weight parts of S-M-M;

where the total of (a); (b) and (c) is from 40 to 100 weight parts based on the total fat being 100 weight parts; and where:

S and SFA both denotes saturated fatty acid(s);

M and MUFA both denote unsaturated fatty acid(s); and

P and PUFA both denotes poly-saturated fatty acid(s).

Optionally in the composition of the invention the fat comprises at least one inter-esterified fatty acid (IEFA) in a total an amount of IEFA from 2 to 12 weight units, based on the total amount of triglycerides in the composition being 100 weight units. An inter-esterified fatty acid (IEFA) refers to a fatty acid present in a triglyceride where the fatty acid components of a triglyceride have been moved between positions within a triglyceride molecule, by for example an inter-esterification reaction. Inter-esterified fats provide good structural stability in aerated food compositions having a continuous fat phase and thus optionally may also comprise inclusions that are preferably larger and/or more homogenously dispersed therein that previously possible with the less stable prior art aerated filling compositions.

The constituent ingredients of the fat component may fall into a plurality of different components. Therefore the sum of the weight parts of these components (such as fatty acids and triglycerides) with respect to total fat being 100 weight parts may exceed the total weight parts of fat, as the weight of their constituents may be counted twice.

The non-fat solids according to the invention may be provided in the form of materials selected from the group consisting of sugar, nuts, cocoa, milk powder and combinations of these. The non-fat solids may be provided at a larger particle size and then dispersed in at least a part of the fat before being ground to the desired particle size distribution. A D90 value is the diameter below which lie 90% of the particles in the distribution. The particle size may be measured by laser light scattering.

According to the present invention, the composition may comprise 0.1 to 2 wt. % of emulsifiers, for example emulsifiers selected from sunflower lecithin, soya lecithin, polyglycerol polyricinoleate (PGPR; E476), ammonium phosphatide (YN; E442) or a combination thereof. The composition may comprise lecithin but no other emulsifier.

In the context of the present invention, the term fat refers to triglycerides. Fats are the chief component of animal adipose tissue and many plant seeds. Fats which are generally encountered in their liquid form are commonly referred to as oils. In the present invention the terms oils and fats are interchangeable. The melting point of a fat may for example be the temperature at which it has a 1 % solid fat content as measured by pulsed NMR.

The aerated food composition of the invention may have a soft texture at 20 °C. Soft textured aerated food compositions include confectionery fillings and spreads. Spreads and fillings may be very soft, for example having a maximum penetration force of between 10 and 60 g at 20 °C. Fillings have a wider range of texture and may have a maximum penetration force of between 10 and 1500 g at 20 °C. A material having a soft texture may be considered to be a material having a maximum penetration force of less than 1500 g at 20 °C, for example less than 1000 g at 20 °C, for further example less than 500 g, for further example less than 100 g, for further example less than 60 g. The maximum penetration force may for example be measured using a 60° conical probe. Conical probes are suitable for soft materials. A conical probe may cause a hard material to fracture before completing the measurement. Hard materials such as chocolate would generally have a penetration force above 3000 g at 20 °C. Cylindrical probes are more suitable for hard materials.

The term "aerated" is used to refer to a foam, in other words a dispersion of a gas in a solid or liquid medium. The gas may be any gas commonly used for foam generation such as $CO_2$, $N_2$ or $N_2O$, but typically the gas is air. The aerated food composition may have a porosity of between 1 and 80 %, for example between 10 and 75 %. The term porosity refers to the fraction of the volume of gas-filled voids over the total volume, as a percentage between 0 and 100 %.

The aerated composition may comprise water, for example water may be emulsified into the continuous fat phase. The aerated food composition of the invention may have a low moisture content, for example the composition may contain less than 5 % water by weight, for example less than 2.5 % water by weight. It should be noted that the aerated composition of the present invention can be formed without moisture, for example without the use of surfactants in water or the formation of an emulsion containing water. Food ingredients that are completely free from moisture are rare, but the composition of the invention may be essentially free from water.

The fat phase of the aerated food composition of the invention may crystallize at two distinct temperatures between 50 °C and 0 °C. This two-step crystallization allows the separation during processing of the stabilization of gas bubbles (after at least a portion of the high-melting fat crystallizes) and the formation of a network in the bulk (after at least a portion of the medium-melting fat crystallizes). The fat component of the aerated food composition of the invention may have a solid fat content between 5 and 45 % at 20 °C (for example between 5 and 35 %) and a solid fat content at 10°C increased by between 10 and 20 % from the value at 20°C. For example the fat component may have a solid fat content of 10 % at 20 °C and solid fat content at 10 °C of 25 %, this being increased by 15 %. The solid fat content may be measured by pulsed NMR, for example according to the IUPAC Method 2.150 (tempered). The solid fat content may also be measured by differential scanning calorimetry.

The aerated food composition may comprise gas bubbles whose surface is wrapped by glyceride crystals. Such crystal-wrapped bubbles being obtainable by cooling the composition such that at least a portion of the high-melting fat crystallizes (for example forming a gel) and then whipping the composition. Particularly stable assemblies of crystal-wrapped bubbles can be obtained by using a process of prolonged and intensive whipping. The composition of the invention may additionally comprise glycerides selected from the group consisting of monoglycerides, diglycerides, esters of monoglycerides, esters of diglycerides and combinations of these. For example glycerides with a melting point between 35 °C and 60 °C, for example between 40 °C and 50 °C. These glycerides can assist in the formation of crystal-wrapped bubbles. Under conditions at which the fat phase has a solid fat content between 0.1 and 80% (e.g. between 5 and 20%), the composition of the invention may comprise gas bubbles having at least 50 % of their surface occupied by crystals, the crystals comprising a glyceride selected from the group consisting of monoglycerides, diglycerides, triglycerides, esters of monoglycerides, esters of diglycerides and combinations of these. The crystals may comprise (for example consist of) triglycerides.

A gel is a non-fluid network characterised by a continuous liquid throughout its whole volume. A gel may be defined by its rheology. For example at a frequency of 1 Hz, the measured linear shear elastic modulus G' of a gel may be greater than 10 Pa and the viscous modulus G" may be less than G'. Gels most suitable for foam generation have a linear shear elastic modulus G' initially in the range $10^2$ - $10^7$ Pa at 1 Hz, for example a linear shear elastic modulus G' initially in the range $10^2$ - $10^6$ Pa at 1 Hz, for further example a linear shear elastic modulus G' initially in the range $10^3$ - $10^6$ Pa at 1 Hz.

The percentage of the gas bubbles' surface occupied by crystals may be measured using microscopy (for example optical and/or confocal microscopy), coupled with suitable image analysis techniques. With a high level of surface coverage it may be immediately obvious after inspection by microscopy that at least 50 % of the surface of the gas bubbles is occupied by crystals.

The crystals occupying at least 50% of the surface of the gas bubbles jam together, resisting any shrinkage of the bubbles and providing a stable, flowable foam when the continuous phase is fluid, such as when the fat phase has a solid fat content between 0.1 and 80 %. The crystals occupying at least 50 % of the surface of the gas bubbles may cause the bubbles to have a non-relaxing shape when the foams are diluted with oil. The crystals comprising a glyceride occupying the surface of the gas bubbles may form layers having an average thickness below 5 $\mu$m.

In the context of the present invention the term flowable foam refers to a foam which can be processed in pumping or stirring units using typical food process equipment without undergoing obvious structural coarsening or collapse. The flowable foam may be flowable under gravity after stirring (for example at 20 °C).

The aerated food composition of the invention may comprise gas bubbles having their surface occupied by glyceride crystals, for example triglyceride crystals, such that their surface density is at least 15 mg.m$^{-2}$, for example at least at least 25 mg.m$^{-2}$, for example at least 50 mg.m$^{-2}$, for further example at least at least 200 mg.m$^{-2}$.

The high-melting fat comprised within the aerated food composition of the invention may be present at a level of between 10 and 45 wt.% of the total fat (for example between 10 and 30 wt.% of the total fat). The medium-melting fat comprised within the aerated food composition of the invention may be present at a level of between 35 and 75 wt.% of the total fat. The low-melting fat comprised within the aerated food composition of the invention may be present at a level of between 10 and 35 wt.% of the total fat (for example between 15 and 35 wt.% of the total fat). Such quantities of the three different melting-point fats provide the desired textural and processing characteristics of the aerated food composition.

The high-melting fat comprised within the aerated food composition of the invention may have a saturated fatty acid content greater than 58 %. The medium-melting fat comprised within the aerated food composition of the invention may have a saturated fatty acid content of between 35 and 55 %. The low melting fat comprised within the aerated food composition of the invention may have a saturated fatty acid content of below 20%. The overall saturated fatty acid content of the aerated food composition is below 50%, on a total fat basis, for example less than 45 wt.%, for further example less than 40 wt.%.

The high melting fat comprised within the aerated food composition of the invention may be selected from the group consisting of stearin or mid-fractions of shea butter, kokum butter, sal butter, cocoa butter, palm oil and algal oil and combinations of these. In addition to stearin or mid-fractions of cocoa butter, the high melting fat may be a naturally hard cocoa butter such as known to be produced from cocoa grown in Malaysia. The medium-melting fat comprised within the aerated food composition of the invention may be selected from the group consisting of soft olein fractions of palm oil, shea butter, kokum butter, sal butter, cocoa butter and algal oil, and combinations of these. The low melting fat comprised within the aerated food composition of the invention may be selected from the group consisting of high oleic sunflower oil, high oleic safflower oil, high oleic soybean oil, high oleic rapeseed oil such as high oleic canola oil, high oleic algal oil, olive oil, macadamia nut oil, hazelnut oil, avocado oil, sunflower oil, rapeseed oil, soybean oil, grape-seed oil, cotton-seed oil, corn oil and combinations of these. Good results are obtained using a fat phase having high levels of triglycerides with saturated fatty acids in the 1 and 3 position. The fat phase of the aerated food composition of the invention may comprise 0.5 to 1.5 wt.% SSS, 2.0 to 3.5 wt.% SSU, more than 40 wt.% SUS, between 20 and 35 wt.% SUU and between 15 and 35 wt.% UUU, wherein S indicates a saturated fatty acid residue with 16 to 24 carbon atoms (C16:0 - C24:0) and U indicates an unsaturated fatty acid residue with 18 carbon atoms. The ratio of saturated fatty acid residues with 16 carbons (C16:0) to saturated fatty acid residues with 18 to 24 inclusive carbon atoms (C18:0-C24:0) comprised within the fat phase of the aerated food composition of the invention may be between 0.5 and 4.0, for example between 1 and 3.5. A higher quantity of C16:0 (palmitic) fatty acid residue in the fat phase compared to longer chain fatty acid residues provides lower viscosity at aeration temperatures between 15 and 20 °C and allows better aeration.

It is beneficial to be able to stabilize an aerated food composition without needing to use triglycerides with high chain length fatty acids. Such high chain length fatty acids, especially saturated ones, affect the organoleptic properties of the foam, giving a heavy and waxy mouthfeel. The inventors were surprised to find that aerated food compositions according to the invention could be effectively stabilized without using triglycerides with high chain length fatty acids, for example by using the method of the invention. The aerated food composition of the invention may comprise less than 2 wt.% triglycerides all of whose fatty acids have a carbon chain length less than 20, for example the aerated food composition of the invention may comprise less than 1 wt.% triglycerides all of whose fatty acids have a carbon chain length less than 20, for example the aerated food composition of the invention may be essentially free from (for example free from) triglycerides all of whose fatty acids have a carbon chain length less than 20. The aerated food composition of the invention may comprise triglycerides all of which have an average fatty acid chain length less than 20. For example, the triglyceride palmitic-oleic-stearic (POSt) has an average chain length of 17.3 as palmitic acid is C16, oleic acid is C18 and stearic acid is C18.

The aerated food composition of the invention may contain more than 95 % by weight of the total fat (for example more than 98 %, for further example more than 99 %) of triglycerides all of whose fatty acids have a carbon chain length less than 22. The aerated food composition of the invention may contain more than 95 % by weight of the total fat (for example more than 98%, for further example more than 99 %) of triglycerides all of whose fatty acids have an average chain length less than 20.

The aerated food composition of the invention may additionally comprise inclusions, for example inclusions with an average diameter greater than 2 mm, for example inclusions which are retained by a sieve with a 2 mm opening. The inclusions may have a diameter ranging from 2 mm to 22.6 mm, for example inclusions which pass through a sieve with an opening of 22.6 mm but are retained by a sieve with a 2 mm opening. The inclusions may have a diameter ranging from 2.83 mm to 11.2 mm, for example inclusions which pass through a sieve with an opening of 11.2 mm but are retained by a sieve with a 2.83 mm opening. The inclusions may be selected from the group consisting of herbs (for example chives, dill, coriander, parsley), cereals (for example puffed rice, puffed wheat, extruded cereal pieces), fruit (for example freeze-dried fruit pieces, candied fruit or alcohol-soaked fruit), nuts, chocolate (for example chocolate vermicelli, chocolate shapes), sugar confectionery (for example cinder toffee pieces, marshmallow, sugar-panned centres such as Nestle mini SMARTIES®) and combinations of these. The composition of the invention, with its two-step crystallization capability, allows inclusions to be mixed into the aerated composition after the first crystallization event without the significant loss of gas volume. The bulk fat remains fluid and so mixing in the inclusions does not cause a destructive level of shear. Once the inclusions are mixed in the second crystallization event can take place, creating the network structure in the bulk fat which provides attractive texture and long-term stability. The aerated food composition of the invention may comprise inclusions in an amount of from 1 to 70%, for example from 1 to 20% by weight of inclusions the total weight of the composition being 100%.

The aerated food compositions of the invention may for example comprise one or more inclusions, for example a plurality of inclusions, preferably in sufficient quantities of inclusion and at a concentration within the aerated food composition that at least one inclusion is present in a typical bite size portion and/or single serving (such as a pre-defined piece within a filled tablet) of a food product that comprises such aerated compositions.

Usefully the inclusions are any inclusions with a harder texture than the aerated composition into which they are incorporated, more usefully comprising fruits, fruit pieces (including nuts) and/or other edible crispy and/or hard pieces.

Inclusions may have a size from 0.5 to 50 mm, for example from 1 to 50 mm, for further example from 2 to 40 mm, for still further example from 3 to 25 mm; for example from 5 to 10 mm. Usefully the inclusions are large, having a size of at least 2 mm, as the stable aerated compositions of the invention are able to support such large inclusions from not substantially migrating within the composition. Conveniently where for example inclusions are added prior to aerating the composition they may be small having a size of no more than 0.5 mm, as the aeration process may break up larger inclusions and/or the inclusions may disrupt the aeration process (e.g. block a nozzle or conduit).

In one embodiment of the invention, the inclusion sizes quoted herein as a linear dimension or ranges thereof, may refer to an average size which would be the diameter of an approximate spherical particle having the same volume as the volume mean measured. In another embodiment of the invention (e.g. when referring to large inclusions) the inclusion sizes quoted herein may refer to a minimum size which would be the diameter of an approximate spherical particle having the same volume as the minimum volume measured and/or the size of the smallest linear dimension of the inclusions. In yet other embodiment of the invention (e.g. when referring to small inclusions) the inclusion sizes quoted herein may refer to a maximum size which would be the diameter of an approximate spherical particle having the same volume as the maximum volume measured and/or the size of the largest linear dimension of the inclusions. A skilled person will be able to deduce from the context which of these sizes are intended for a given composition and/or inclusion.

Conveniently the (optionally harder) inclusions are distributed substantially homogenously within the (optionally softer) aerated composition of the invention which is sufficiently structured to hold the inclusions in place and prevent significant movement within the aerated composition - for example when forming part of a filled product. Thus the aerated compositions of the invention substantially hinder and/or prevent agglomeration and/or sinking of the inclusions to the bottom of the composition e.g. under gravity.

Conveniently the inclusions comprise any of the following and/or mixtures thereof: fruits or fruit pieces which may be: hard fruits (e.g. hazelnuts, almonds, brazil nuts, cashew nuts, peanuts and/or similar) and/or soft fruits (e.g. raisins, cranberries, blueberries, blackcurrant, apples, pear, orange, apricot and/or similar), preferred soft fruits are dried fruits; crispy inclusions (e.g. caramel, coffee, biscuits, wafer hard candy pieces etc.); and/or any suitable mixtures thereof.

The aerated food composition according to the invention may be a savoury composition such as a meat or fish flavoured filling for a pastry. The aerated food composition according to the invention may be a component of a pet food, for example a filling for an extruded dog biscuit. The aerated food composition according to the invention may be a sweet spread, such as an aerated chocolate and hazelnut spread. The aerated food composition according to the invention may be a confectionery filling; for example a sweet filling for a pastry, biscuit, extruded cereal, or moulded chocolate product. The aerated food composition according to the invention may be a stable aerated filling composition suitable for use in confectionery.

The aerated food composition according to the invention may be a confectionery filling for a biscuit such as a wafer. Wafers are baked products which are made from wafer batter and have crisp, brittle and fragile consistency. They are thin, with an overall thickness usually between < 1 and 4 mm and typical product densities range from 0.1 to 0.3 g/cm$^3$. The surfaces are precisely formed, following the surface shape of the plates between which they were baked. They often carry a pattern on one surface or on both. Wafers may also be produced by extrusion. Two basic types of wafer are described by K.F. Tiefenbacher in "Encyclopaedia of Food Science, Food Technology and Nutrition p 417-420 - Academic Press Ltd London - 1993":

1) No- or low-sugar wafers. The finished biscuits contain from zero to a low percentage of sucrose or other sugars. Typical products are flat and hollow wafer sheets, moulded cones or fancy shapes.

2) High-sugar wafers. More than 10% of sucrose or other sugars are responsible for the plasticity of the freshly baked sheets. They can be formed into different shapes before sugar recrystallization occurs. Typical products are moulded and rolled sugar cones, rolled wafer sticks and deep-formed fancy shapes.

The invention further provides a filled confectionery product (for example a chocolate confectionery product) comprising the aerated food composition of the invention.

In another embodiment of the invention provides a filled confectionery product that comprises from 20 to 70% by weight of the product of an aerated food composition of the invention (for example the aerated food composition of the invention having a porosity from 40% to 60%). Optionally the remainder of the product being a shell of chocolate-like material such as compound or chocolate that substantially encloses (for example completely encloses) the product. The aerated food composition may comprise from 1 to 70% by weight (with respect to the weight of aerated food composition) of inclusions homogenously dispersed therein with no substantial change in the porosity of the aerated food composition.

Whether inclusions are substantially homogenously dispersed within the aerated food composition will be readily apparent from a visible inspection (for example of a cross-section of the product if the filling is fully enclosed). There has been a problem in the prior art that when large amounts of inclusions and/or large inclusions are added to known aerated compositions, the inclusions sink to the bottom of the filling as they are unable to be supported in place within the aerated filling which has insufficient structure to prevent or mitigate movement of inclusions within the filling which migrate under gravity due to their own weight. Therefore it is an object of one aspect of one embodiment of the present invention to provide aerated food compositions with inclusions that are dispersed evenly from top to bottom over the height of the composition and/or remain within substantially the same horizontal plane within the middle of the composition. Thus in aerated food compositions of the present invention the inclusions do not (or have reduced tendency to) to clump at the bottom of the composition.

It will also be understood that the terms top and bottom referring to a product may be interchangeable and depend for example how the product is formed and its orientation under gravity. Thus for example the top of a product in use or when packed may be the bottom of the product when formed in a mould during production. The term 'substantially horizontal' refers to a plane through an axis of the product which during storage, transport and display of the product in store is likely to be held substantially horizontal, e.g. where the product is stored flat on a largely (preferably exactly) horizontal surface. A substantially horizontal surface is typically parallel to the major plane of the product, for example the flat bottom side of large area of a filled chocolate tablet. As used herein 'substantially vertical' refers to lines or planes which are substantially perpendicular (preferably perpendicular) to a substantially horizontal (preferably exactly horizontal) line or plane as defined herein. Preferred substantially vertical orientation is vertical, especially aligned with the direction of gravity in the typical position of the product in storage, transport and/or display.

Thus the exact definition of homogeneity will depend on the product size and shape (and filling component thereof) and the amount and quantity of inclusions relative to the amount of aerated food composition, but whatever definition is used, it is strongly preferred that the aerated food compositions with inclusions avoid clumping of the inclusions at the periphery of the composition.

In one embodiment of the invention the term substantially homogeneous is used to denote that the inclusions are substantially equally and evenly dispersed within the height of an aerated food composition of the invention such height measured along a substantially vertical plane within a food product such that the inclusions are not disproportionally located at the bottom or top end of said plane, preferably are substantially evenly distributed along it.

In a yet other embodiment of the invention the term substantially homogeneous is used to denote that the inclusions are substantially equally and evenly dispersed within the aerated food composition (especially within the height thereof) when within a food product such that the inclusions have a normal distribution of linear spaces between them and one standard deviation of these spaces is no more than 10% the linear length of any dimension of the product or filling component there within, preferably such distribution being measured across a substantially vertical plane.

In another embodiment of the invention the term substantially homogeneous may be used instead or as well as the previous definition to denotes a measure of homogeneity defined by a homogeneity index that measures how uniformly the inclusions are distributed within the composition, being especially suitable for use with large amounts of small sized inclusions.

The homogeneity index may be determined by taking an image (from X-ray tomography and/or CLSM) and measuring the number of inclusions that intersect along at least 3 parallel horizontal lines of equal length (for example at least 10 cm) located on the image to be equally spaced from each other and the image edges. The ratio of the minimum number of inclusions on one of these lines to the maximum number of inclusions on one of these lines can be defined as a number homogenous distribution index (NHDI) which for aerated fillings of the invention may be at least 0.4, for example greater than or equal to 0.5, for further example greater than or equal to 0.6, for still further example $\geq$ 0.7.

In another alternative or cumulative embodiment of the invention the homogeneity index that measures how uniformly the inclusions are distributed may be determined by taking an image (from X-ray tomography and/or CLSM) and measuring along each of at least 3 parallel horizontal lines of equal length (preferably at least 1 cm) located on the image to be equally spaced from each other and the image edges, the length of each line that lies inside the inclusion. The ratio of the minimum length on one of these lines to the maximum length on one of these lines can be defined as inclusion length homogenous distribution index (ILHDI) which may be at least 0.4, for example greater than or equal to 0.5, for further example greater than or equal to 0.6, for still further example $\geq$ 0.7.

Homogeneity index is measured on a sufficiently large volume of sample that is appropriate for the size and concentration of inclusions that are present. Thus for example some bigger inclusions (such as blueberries) may be added to the composition at a dosing ratio of 5% in the filling by weight (corresponds to approximately 8 fruit pieces in 80g serving of filling which is approximately the amount present in one filled tablet, so a much larger quantity of filling and/or sample size of products would be needed to measure homogeneity using either measure described herein.

Homogeneity index may also be used to measure the homogeneity of the bubbles within the aerated composition and in a preferred embodiment, the bubbles may also be distributed homogenously with a NHDI and/or LHDI which may be at least 0.8, for example greater than or equal to 0.85, for further example greater than or equal to 0.9.

In a still further embodiment the invention provides a filled confectionery product such as a filled chocolate tablet or bar that comprises from 50 to 70%, for example from 55 to 65%, for further example about 60% by weight of the product of an aerated food composition of the invention optionally with inclusions homogenously dispersed therein.

A further aspect of the invention provides a method of manufacturing the aerated food composition of the invention, the method comprising the steps; providing a composition comprising (for example consisting of) the non-fat solids and the fat (for example non-interesterified fat), the continuous fat phase comprised within the composition being liquid; letting the composition perform a first crystallization event; aerating the composition; and controlling the temperature of the aerated composition to allow a second crystallization event in the composition. In the context of the present invention, the continuous fat phase comprised within the composition being liquid means that the solid fat content of the continuous fat phase is less than 0.1 %. Some fat in the composition may be isolated and not form part of the continuous fat phase, for example fat trapped within non-fat materials such as milk powder.

Letting the composition perform a first crystallization event may involve cooling the composition, for example cooling the composition to a temperature below the melting point of the high-melting fat but above the melting point of the medium-melting fat. The first crystallization event may be initiated by the addition of seeding crystals, for example cooling the composition to below the melting point of the high-melting fat and adding seeding crystals of high-melting fat.

The solid fat content of the composition during aeration according to the method of the invention may be between 5 and 20 % of the total fat. It has been surprisingly found that by cooling a liquid composition comprising fat to a temperature at which there is partial crystallization and a gel is formed and then whipping the composition, a stable foam is produced. The composition may form a gel before it is aerated in the method of the invention. The gel structure may continue to develop during and after aeration. Good results may be obtained by allowing the partially crystallized composition to mature before being aerated. In the method of the invention there may be a time interval of at least 2 minutes between the first crystallization event and the start of aeration.

The temperature for the first crystallization event in the method of the invention should be chosen to allow crystallization of at least part of the high-melting fat in the composition without significant crystallization of the medium-melting fat, for example without any crystallization of the medium-melting fat. The first crystallization event in the method of the invention may be performed at a composition temperature of between 16 and 24 °C. For ease of processing, the temperature may be raised before aeration, as long as some crystals remain, however, the method of the invention may be performed without any heating of the composition between the first and second crystallization events.

The temperature for the second crystallization event in the method of the invention should be chosen to allow crystallization of at least part of the medium-melting fat in the composition. The second crystallization event in the method of the invention may be performed at a composition temperature at least 5 °C lower than the composition temperature of the first crystallization event (for example between 5 °C and 20 °C lower than the composition temperature of the first crystallization event). The second crystallization event may for example be performed in a cooling tunnel, for example a cooling tunnel with a minimum temperature between 5 and 15 °C. The solid fat content of the composition may increase by at least 10 % of the total fat during the second crystallization event in the method of the invention.

The aeration step in the method of the invention may comprise mechanical agitation, for example whipping. Although foams can be obtained by non-mechanical agitation methods, such as dissolving or dispersing gas under pressure and then releasing it, to obtain the most stable foams it is preferable to apply mechanical agitation. Without wishing to be constrained by theory, it is proposed that mechanical agitation increases the wrapping of the gas bubbles with glyceride crystals. Mechanical agitation may for example be applied using rotor-stator type of equipment, such as a Haas-Mondomix aerating system. After the first crystallization event, and maturation (if any), the partial-crystallized composition may be gently sheared to allow an easy transfer to the aerating system. Mechanical agitation, for example whipping, may be applied for at least 5 s (such as the residence times in a continuous rotor-stator system), for example at least 1 minute, for example at least 5 minutes (such as in a batch whipping machine), for example at least 10 minutes, for further example at least 30 minutes. Foam stability generally increases with increasing mechanical agitation time. The aeration step in the process of the invention may comprise gas depressurization followed by mechanical whipping. Such a combination of initial bubble generation using dissolved/dispersed gas and a pressure drop followed by mechanical agitation may usefully be employed, however all process steps may be performed at or near atmospheric pressure, for example at an absolute pressure of between 800 hPa and 2100 hPa, for example between 850 hPa and 1100 hPa.

The method of the invention provides a part-processed aerated composition before the second crystallization event which is both fluid and has excellent foam stability.

This allows the foam to undergo processing steps which would normally be expected to damage the foam. For example, inclusions with an average diameter greater than 2 mm may be mixed into the aerated composition before the second crystallization event in the method of the invention. The inclusions may be homogeneously dispersed in the aerated composition. Inclusions with an average diameter greater than 2 mm are those which are retained by a sieve with a 2 mm opening. The inclusions may have a diameter ranging from 2 mm to 22.6 mm, for example inclusions which pass through a sieve with an opening of 22.6 mm but are retained by a sieve with a 2 mm opening. The inclusions may have a diameter ranging from 2.83 mm to 11.2 mm, for example inclusions which pass through a sieve with an opening of 11.2 mm but are retained by a sieve with a 2.83 mm opening. Small inclusions, for example those with a maximum size of 0.5 mm may be added prior to or during the aeration step.

The composition after aeration may be filled into moulds before the second crystallization step, for example where the composition is a confectionery filling it may be deposited as a centre in a chocolate shell-moulding process. The composition after aeration may be combined with extruded cereal, for example co-extruded as a filling in a cereal tube which may be crimped to form cereal pillows. The composition after aeration may be laminated between wafer sheets, for example to form a wafer "book". It is advantageous that the aerated food composition of the invention may be laminated between wafer sheets, a process which applies a high degree of shear, without significant loss of aeration. It is also advantageous that the aerated food composition of the invention forms a cohesive layer between wafer sheets, allowing them to be cut into shapes without delamination.

Those skilled in the art will understand that they can freely combine all features of the present invention disclosed herein. In particular, features described for the composition of the present invention may be combined with the method of the present invention and vice versa. Further, features described for different embodiments of the present invention may be combined. Further advantages and features of the present invention are apparent from the figures and non-limiting examples.

## Examples

Example 1: Fat compositions

A series of fat compositions were prepared as shown in Table 1. Composition A is a high-melting fat (shea stearin fraction, CBI, Illexao HS 90 from AAK), composition B is a palm olein, composition C is a mixture of shea stearin and hard cocoa butter with rapeseed oil, and composition D is a mixture of the shea stearin fraction with rapeseed oil. The cocoa butter (Malaysian) used in composition C had a solid fat content at 30 °C of 50% and a melting point (1% SFC) of 35 °C. Compositions E and F comprise combinations of a high-melting fat, a medium melting fat and a low-melting fat (all non-interesterified). The components were mixed together after melting in a range of 50-70 °C and were maintained at 30 °C.

Regioisomeric distribution of fatty acids: An Accela 1250 liquid chromatograph (ThermoFisher Scientific, Bremen, Germany) equipped with an Agilent Poroshell 120 EC-C18 column (2.7 $\mu$m particle size, 2.1 $\times$ 250 mm, from BGB Analytix, Boeckten, Switzerland, cat.no. 693775-902) was used for separation of analytes. An LTQ-Orbitrap XL hybrid mass spectrometer (ThermoFisher Scientific, Bremen, Germany) was used for mass analysis, fragmentation and quantification of the triacylglycerols and fatty acids.

High resolution Orbitrap and nominal resolution linear ion trap data was integrated and extracted using the software Quanbrowser (ThermoFisher Scientific, Bremen, Germany). Chromatographic peak areas were extracted in 10 ppm m/z windows. MS Excel and its built-in Solver was used for further interpretation of the data e.g. to calculate the relative proportions of regioisomers matching the experimental data.

Table 1

| Composition | A | B | C | D | E | F |
|---|---|---|---|---|---|---|
| % Components | | | | | | |
| i. Shea stearin fraction[HM] | 100.0 | 0 | 24.9 | 20.0 | 25.0 | 20.0 |
| ii. Hard cocoa butter[HM] | 0 | 0 | 11.4 | 0 | 0 | 0 |
| iii. Palm olein[MM] | 0 | 100.0 | 0 | 0 | 52.3 | 55.0 |
| iv. Rapeseed oil[LM] | 0 | 0 | 63.7 | 80.0 | 22.7 | 25.0 |
| Ratio SSU/SUS | <0.1 | 0.1 | <0.1 | <0.1 | <0.1 | <0.1 |
| SSS content | 3 | 0.6 | 1.0 | 0.6 | 1.0 | 0.8 |
| Ratio C16:0/C18:0-C24:0 | <0.1 | 10.4 | 0.4 | 0.3 | 1.4 | 1.7 |
| % SFA content | 61 | 43 | 28 | 20 | 40 | 38 |
| % SFC at 20 °C* | 87 | 13 | 32 | 15 | 22 | 16 |
| HM = High Melting fat; MM = Middle Melting fat; LM = Low Melting fat *IUPAC 2.150 method | | | | | | |

Example 2: Lab scale aeration

A Megatron MT-FM30 (Kinematica AG) aeration unit coupled with an IKA screw pump was used to aerate the fat mixtures outlined in Table 1. Typical settings for fat mixtures were followed but was varied from one composition to the other depending on the viscosity and kinetics of crystallization during process (Table 2.1).

Table 2.1

| | |
|---|---|
| Feed tank temperature (°C) | 25-30 |
| Screw-pump flow (mL/min) | 25 |
| Pipe jacket temperature (°C) | 10-15 |
| $N_2$ pressure (mL/min) | 20 |
| Rotor speed (rpm) | 1000-1500 |
| Aeration head temperature (°C) | 10-18 |
| Outlet product temperature (°C) | 21-23 |

Foam characterization

- 0R/porosity: The levels of aeration have been estimated by Over-Run (OR) or porosity ($\Phi$) measurements in standardized 3 cL plastic cups.

$$\%OR = \frac{m_{non\ aerated} - m_{aerated}}{m_{aerated}} \times 100$$

$$\%\emptyset = \frac{OR}{OR + 100} \times 100$$

- SFC measurements: The SFC of aerated samples was determined using pulsed NMR (Nuclear Magnetic Resonance), Minispec mq20 NMR Analyzer, Bruker Biospin GMBH (Rheinstetten, Germany) using IUPAC 2.150 tempered method. Supplier standards which had solids at 0 %, 31.1 % and 72.8 % solids were used to calibrate the equipment. Approximately 2 g of aerated samples was placed in a 10 mm NMR tube for SFC measurements just after aeration and further cooling at 10 °C for 30 mins (Table 2.2).

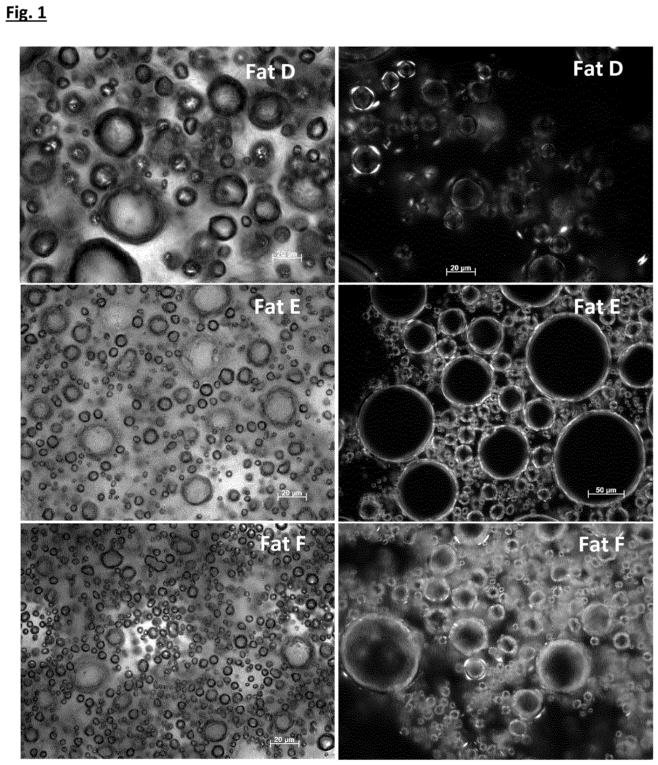

- Optical microscopy: A few drops of aerated samples were placed onto a glass slide for microscopic observation and also diluted with HOSO to be imaged using appropriate magnification and brightfield illumination using a Zeiss optical microscope. The presence or absence of gas bubbles having at least 50 % of their surface occupied by crystals was noted. The micrographs of samples C-E are shown in figure 1, where the images in the right column are diluted foam samples.

- Texture analysis: Approximately 30 grams of each aerated sample mass was poured in plastic cups and crystallized at 10°C for 30 min. Then the samples were stored for 1 day at 20°C to stabilize. The hardness of the aerated samples was measured at room temperature with a TA-HDi texture analyzer, using a conical probe of 60°, speed 1 mm/sec and 10 mm penetration with a force threshold of 5 g. 5 replicates were performed to record the maximum force of penetration. The results obtained are displayed in table 2.2.

- Oiling out measurements: Approximately 6-8 g of aerated samples were hand piped on a filter paper placed in a plastic Petri dish just after aeration and was cooled at 10°C for 30 mins before storing at 20°C for 1 day. After 1 day of storage, the stability of the aerated samples was evaluated at 28°C, 30°c and 34°C by further overnight storage. The levels of oiling out from the samples have been estimated by measuring the extent of oil released at different temperatures (Table 2.2).

$$\% \ oiling \ out = \frac{M_{released \ oil}}{M_{sample}} \times 100$$

- Differential scanning calorimetry (DSC): The melting thermograms of aerated filling recipes were obtained with a Mettler Toledo DSC823e equipped with a TSO800GC1 gas unit (Mettler-Toledo, Ohio, United States). Nitrogen was used to purge the system. Approximately 15-20 mg of each aerated filling recipe were weighed into aluminum pans and then hermetically sealed. An empty pan was used as reference. The aerated samples were kept at 20°C for 10 min and reheated to 50°C at the rate of 10°C/min. Results were evaluated using the STARe Evaluation Software (Mettler-Toledo, Ohio, United States).

Table 2.2

| Foam/Parameter | A | B | C | D | E | F |
|---|---|---|---|---|---|---|
| % OR* | - | - | - | 150 | 280 | 280 |
| % Porosity1* ($\Phi$) | - | - | - | 60 | 74 | 74 |
| % Porosity2** ($\Phi$) | - | - | - | 50 | 55 | 65 |
| % SFC after aeration | - | - | - | 15 | 10 | 9 |
| % SFC after cooling at 10°C for 30 min | >80 | <5 | - | 17 | 30 | 27 |
| Texture after cooling at 10°C (g) | - | - | - | 56 | 780 | 331 |
| Texture after 1 day storage at 20°C (g) | - | - | - | 66 | 403 | 214 |
| Texture index after 1 day storage at 20°C pr. % SFA | - | - | - | 3.3 | 10.1 | 5.6 |
| % Oiling out<br>28°C<br>30°C<br>34°C | <br>-<br>-<br>- | <br>-<br>-<br>- | <br>-<br>-<br>- | <br>16<br>18<br>100 | <br>14<br>16<br>100 | <br>12<br>28<br>100 |
| *% OR or Porosity1 = OR or porosity of foam after aeration<br>**% Porosity2 = Porosity of foam after mixing with 10 wt% fruit inclusions of 3 mm size | | | | | | |

From the above results it can be concluded that within the typical aeration parameters (Table 2.1) fat A, B and C were unable to aerate (data not shown) due to extremely fast (A, C) or slow (B) crystallization kinetics resulting in too high viscosity (A, C) or in too low crystal concentration (B) in process. Greater degrees of porosity were obtained for the blends of high-melting, medium-melting and low-melting fats (E and F) than for the simple combination of a high-melting fat with an oil (D).

Figure 1 shows the aerated foam micrographs of the fat blends (D-F), with or without diluting with liquid oil. By diluting the foams with liquid oil the bulk rheological effects normally acting on bubble shape are suppressed, but the interfacial stabilization of the crystals around the bubbles can be observed by the fact that the bubble shape do not relax. From these micrographs, around 50% of bubbles were found to have a surface coverage at least 50% of the maximal surface coverage. Maximal surface coverage corresponds to a jammed structure of crystals absorbed at a bubble's interface, or at the interface between two bubbles. The dense packing of crystals at bubble interfaces gives good structural stability. Hence the non-interesterified fat blends E and F were found to retain at least 75% of the porosity after mixing with 10 wt.% fruit inclusions of 3 mm size.

It was observed that the aerated foams from compositions E and F displayed a 3-fold increase in SFC after cooling at 10°C for 30 minutes compared to the foam from composition D, despite containing similar levels of high melting fat (~20 wt.%). The foams from compositions E and F also showed higher texture and texture index. The texture index of the aerated samples is defined as texture per percent of SFA content of the fat. The presence of middle-melting fats in the fat blends allows a slow crystallization over time to provide additional texture. By tuning the proportions of high-melting, middle-melting and low-melting fats it is possible to achieve different levels of texture whilst maintaining similar levels of saturated fatty acid (SFA) content.

The aerated foams from the compositions comprising high-melting, medium-melting and low-melting fats (E and F) were equally temperature stable as the fat blend D, but advantageously displayed less oiling-out below 30°C.

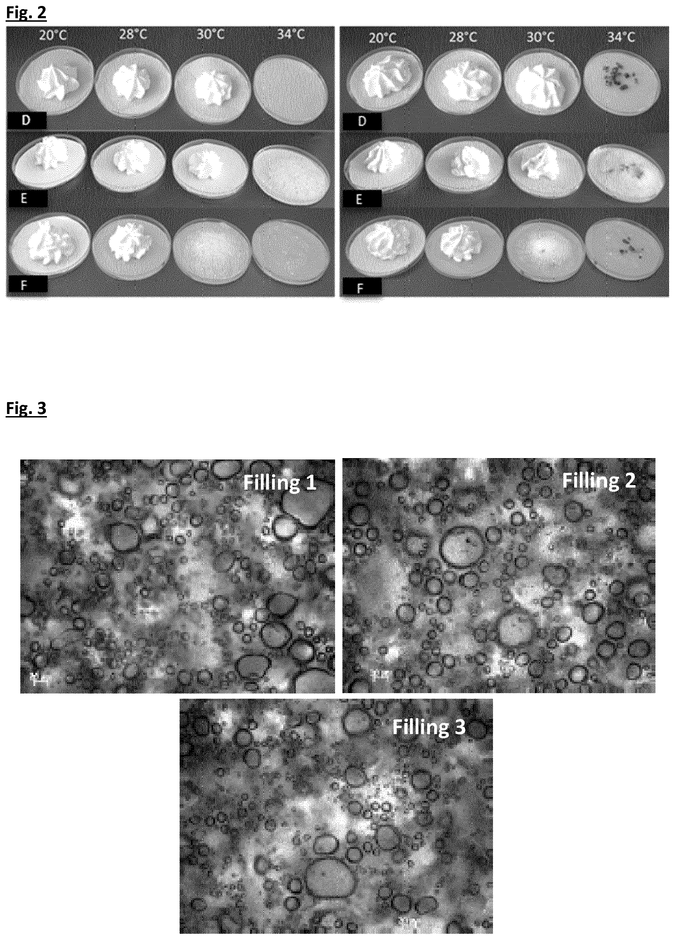

Figure 2 shows the structural stability of the aerated compositions D-E stored overnight at 20, 28, 30 and 34 °C.

Example 3: Further fat compositions

Table 3 illustrates further composition comprising high-melting, medium-melting and low-melting fats. The components were mixed together after melting in a range of 50-70 °C and were maintained at 30 °C.

Table 3

| Composition | G | H |
|---|---|---|
| % Components | | |
| i. Shea stearin fraction[HM] | 20.0 | 20.0 |
| ii. Palm olein[MM] | 50.0 | 65.0 |
| iii. Rapeseed oil[LM] | 30.0 | 15.0 |
| Ratio SSU/SUS | <0.1 | <0.1 |
| SSS content | 0.8 | 0.9 |
| Ratio C16:0/C18:0-C24:0 | 1.6 | 2.0 |
| % SFA content | 37 | 42 |
| % SFC at 20°C* | 17 | 12 |
| HM = High Melting fat; MM = Middle Melting fat; LM = Low Melting fat *IUPAC 2.150 method | | |

Example 4: Aerated confectionery fillings

Filling recipes 1-3 were prepared at pilot scale with compositions E, G, and H respectively (see Table 3 and Table 1) as elaborated in Table 4. The fillings were prepared by first blending the dry ingredients with part of the fat compositions, followed by refining with a 3 roll-refiner and treating the mixture in a Stephan mixer at 50-60 °C where the remaining fat and lecithin were added and mixed into the filling mass. Approximately 25 kg of each filling recipe was prepared with average particle size ($D_{90}$) between 100-150 microns.

Table 4

| Ingredient (wt %) | Filling recipes | | |
|---|---|---|---|
| | 1 | 2 | 3 |
| Sugar | 34.9 | 34.9 | 34.9 |
| Skim milk powder | 34.9 | 34.9 | 34.9 |
| Composition E | 29.9 | - | - |
| Composition G | - | 29.9 | - |
| Composition H | - | - | 29.9 |
| Sunflower lecithin | 0.2 | 0.2 | 0.2 |
| Total fat | 30.5 | 30.5 | 30.5 |
| % SFA | 40 | 37 | 42 |
| Particle size distribution ($D_{90}$) | 133 | 136 | 115 |

Pilot scale aeration

A Haas-Mondomix aeration machine was used to aerate the fillings outlined in Table 4 at pilot scale. Typical settings for fillings were followed but was varied from one composition to the other depending on the viscosity and kinetics of crystallization during process (Table 4.1).

Table 4.1

| Inlet product temperature (°C) | 30 |
|---|---|
| SSHE temperature (°C) | 16-18 |
| SSHE rotor speed (rpm) | 100-200 |
| Inlet product temperature (°C) | 20-22 |
| $N_2$ pressure (L/hr) | 7-10 |
| Rotor speed (rpm) | 400-450 |
| Aeration head temperature (°C) | 8-10 |
| Back pressure (bar) | 0.2-0.5 |
| Outlet product temperature (°C) | 21-23 |
| *SSHE - Scraped Surface Heat Exchanger | |

Filling recipes 1-3 comprising blends of high-melting, medium-melting and low-melting non-interesterified fats (E, G, and H) were able to be successfully aerated displaying similar OR and porosity (~40%).

Figure 3 shows an aerated filling micrographs of filling recipe 1-3. Maximal surface coverage corresponds to a jammed structure of crystals absorbed at a bubble's interface, or at the interface between two bubbles. The filling recipes 1-3 retained around 85% of their porosity after mixing with 2.5 wt. % freeze dried fruit inclusions of 3-6 mm size (Table 4.2).

By varying the proportions of high-melting, middle-melting and low-melting fats the filling recipes 1-3 provided different levels of texture and texture index (13 to 18.5) after 7 day storage at 20°C whilst having approximately similar levels of SFA (37-42 %). The overall texture of the filling recipes were found to be determined by their low-melting fat content, in respective fat blends. Recipe 2 and 3 contained respectively the maximum (30% in fat phase) and minimum (15% in fat phase) amount of low-melting fat, which displayed the lowest and highest hardness. The higher hardness displayed in Recipe 3 which contained highest amount of middle- melting fat i.e. Palm olein (65% in fat phase) also illustrate well the post-hardening or delayed crystallization of Palm olein with time and storage (2nd crystallization step).

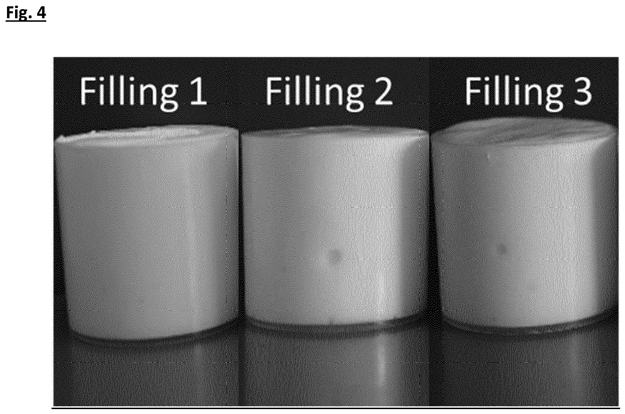

Figure 4 shows the structural stability and appearance of the filling recipes 1-3 after 1 week storage at around 20°C. No foam collapse or phase separation (oiling out) were observed. This demonstrates that the dense packing of crystals at bubble interfaces provides the fillings with good structural stability making them suitable for use in food products which require long shelf-lives. The creation of an extensive network during the second crystallization event helps prevent oil migration, which in the case of a filing to be used in contact with chocolate, can help prevent fat bloom.

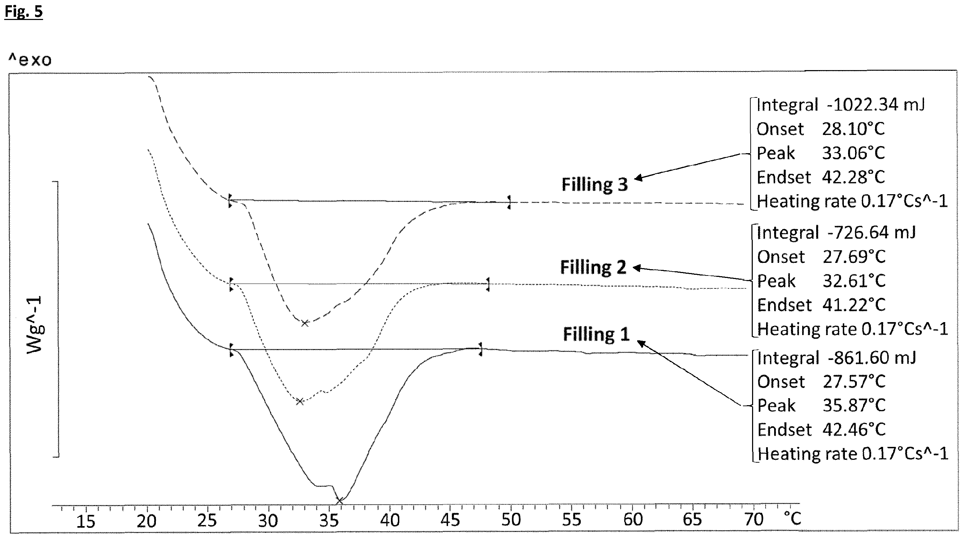

Figure 5 shows the melting thermograms of filling recipes 1-3 stored at around 20°C for 1 week, obtained using DSC. The overall melting fingerprint region for filling recipes of present invention were found to be between 24°C to 42°C. However, major melting temperature of the fillings were found to be higher with higher content of high melting fat (for e.g. shea stearin).

Table 4.2

| Foam/Parameter | Filling recipes | | |
|---|---|---|---|
| | 1 | 2 | 3 |
| % OR* | 80 | 67 | 60 |
| % Porosity1* ($\Phi$) | 44 | 40 | 38 |
| % Porosity2** ($\Phi$) | 38 | 36 | 34 |
| Texture after 7 day storage at 20°C (g) | 548 | 478 | 775 |
| Texture index after 7 days at 20°C pr. % SFA | 13.7 | 13.0 | 18.5 |
| *% OR or Porosity1 = OR or porosity of filling after aeration | | | |
| **% Porosity2 = Porosity of filling after mixing with 2.5 wt% freeze dried fruit inclusions of 3-6 mm size | | | |

**Claims**

1. Aerated food composition having a continuous fat phase, the composition comprising

   between 20 and 60 wt.% of fat and between 40 and 80 wt.% of non-fat solids having a particle size distribution D90 of less than 250 $\mu$m, as measured by laser light scattering, the fat comprising a high-melting fat, a medium-melting fat, and a low-melting fat,
   wherein the aerated composition comprises, on a total fat basis,
   less than 50 wt.% of saturated fatty acids, between 9 and 60 wt.% of monounsaturated fatty acid, and less than 30 wt.% of polyunsaturated fatty acid, and
   wherein the high-melting fat has a melting point between 35 °C and 80 °C, the medium-melting fat has a melting point between 15 °C and 30 °C and the low-melting fat has a melting point between -50 °C and 5 °C and the aerated food composition is prepared by a method comprising the steps:

   providing a composition comprising the non-fat solids and the fat, the continuous fat phase comprised within the composition being liquid;
   letting the composition perform a first crystallization event;
   aerating the composition;
   and controlling the temperature of the aerated composition to allow a second crystallization event in the composition.

2. An aerated food composition according to claim 1 wherein the fat is not interesterified.

3. An aerated food composition according to claim 1 or claim 2 wherein the fat has a solid fat content between 5 and 45 % at 20 °C and a solid fat content at 10 °C increased by between 10 and 20 % from the value at 20 °C.

4. An aerated food composition according to any one of claims 1 to 3 wherein, under conditions at which the fat phase has a solid fat content between 0.1 and 80 %, the composition comprises gas bubbles having at least 50 % of their surface occupied by crystals, the crystals comprising a glyceride selected from the group consisting of monoglycerides, diglycerides, triglycerides, esters of monoglycerides, esters of diglycerides and combinations of these.

5. An aerated food composition according to any one of claims 1 to 4 wherein the high-melting fat is present at a level of between 10 and 45 wt.% of the total fat, the medium-melting fat is present at a level of between 35 and 75 wt.% of the total fat and the low-melting fat is present at a level of between 10 and 35 wt.% of the total fat.

6. An aerated food composition according to any one of claims 1 to 5 wherein the high melting fat is selected from the group consisting of stearin or mid-fractions of shea butter, kokum butter, sal butter, cocoa butter, palm oil, algal oil and combinations of these; the medium-melting fat is selected from the group consisting of soft olein fractions of palm oil, shea butter, kokum butter, sal butter, cocoa butter and algal oil and combinations of these; and the low melting fat is selected from the group consisting of high oleic sunflower oil, high oleic safflower oil, high oleic soybean oil, high oleic rapeseed oil such as high oleic canola oil, high oleic algal oil, olive oil, macademia nut oil, hazelnut oil, avocado oil, sunflower oil, rapeseed oil, soybean oil, grape-seed oil, cotton-seed oil, corn oil and combinations of these.

7. An aerated food composition according to any one of claims 1 to 6 additionally comprising inclusions with an average diameter greater than 2 mm.

8. An aerated food composition according to any one of claims 1 to 7 wherein the composition is a confectionery filling.

9. Method of manufacturing an aerated food composition according to any one of claims 1 to 8, the method comprising the steps;

   providing a composition comprising the non-fat solids and the fat, the continuous fat phase comprised within the composition being liquid;
   letting the composition perform a first crystallization event;
   aerating the composition;
   and controlling the temperature of the aerated composition to allow a second crystallization event in the composition.

10. A method according to claim 9 wherein the solid fat content of the composition during aeration is between 5 and 20 % of the total fat.

11. A method according to claim 9 or claim 10 wherein the first crystallization event is performed at a composition temperature of between 16 and 24 °C.

12. A method according to any one of claims 9 to 11 wherein the second crystallization event is performed at a composition temperature at least 5 °C lower than the composition temperature of the first crystallization event.

13. A method according to any one of claims 9 to 12 wherein the solid fat content of the composition increases by at least 10 % of the total fat during the second crystallization event.

14. A method according to any one of claims 9 to 13 wherein the aeration step comprises mechanical agitation.

15. A method according to any one of claims 9 to 14 wherein inclusions with an average diameter greater than 2 mm are mixed into the aerated composition before the second crystallization event.


**Patentansprüche**

1. Belüftete Lebensmittelzusammensetzung, die eine kontinuierliche Fettphase aufweist, die Zusammensetzung umfassend:

zwischen 20 und 60 Gew.-% Fett und zwischen 40 und 80 Gew.-% Nicht-Fett-Feststoffe, die eine Teilchengrößenverteilung D90 von weniger als 250 μm aufweisen, wie gemessen durch Laserlichtstreuung, das Fett umfassend ein hochschmelzendes Fett, ein mittelschmelzendes Fett und ein niedrigschmelzendes Fett, wobei die belüftete Zusammensetzung auf einer Gesamtfettbasis weniger als 50 Gew.-% gesättigte Fettsäuren, zwischen 9 und 60 Gew.-% einfach ungesättigte Fettsäure und weniger als 30 Gew.-% mehrfach ungesättigte Fettsäure umfasst, und wobei das hochschmelzende Fett einen Schmelzpunkt zwischen 35 °C und 80 °C aufweist, das mittelschmelzende Fett einen Schmelzpunkt zwischen 15 °C und 30 °C aufweist und das niedrigschmelzende Fett einen Schmelzpunkt zwischen -50 °C und 5 °C aufweist und die belüftete Lebensmittelzusammensetzung durch ein Verfahren hergestellt wird, umfassend die Schritte:

Bereitstellen einer Zusammensetzung, umfassend Nicht-Fett-Feststoffe und das Fett, wobei die kontinuierliche Fettphase, die innerhalb der Zusammensetzung enthalten ist, flüssig ist; Durchführenlassen eines ersten Kristallisationsereignisses von der Zusammensetzung; Belüften der Zusammensetzung; und Steuern der Temperatur der belüfteten Zusammensetzung, um ein zweites Kristallisationsereignis in der Zusammensetzung zu ermöglichen.

2. Belüftete Lebensmittelzusammensetzung nach Anspruch 1, wobei das Fett nicht umgeestert ist.

3. Belüftete Lebensmittelzusammensetzung nach Anspruch 1 oder 2, wobei das Fett einen festen Fettgehalt zwischen 5 und 45 % bei 20 °C und einen festen Fettgehalt bei 10 °C aufweist, der um zwischen 10 und 20 % von dem Wert bei 20 °C erhöht wird.

4. Belüftete Lebensmittelzusammensetzung nach einem der Ansprüche 1 bis 3, wobei unter Bedingungen, bei denen die Fettphase einen festen Fettgehalt zwischen 0,1 und 80 % aufweist, die Zusammensetzung Gasblasen umfasst, bei denen mindestens 50 % ihrer Oberfläche durch Kristalle belegt sind, die Kristalle umfassend ein Glycerid, das aus der Gruppe ausgewählt ist, bestehend aus Monoglyceriden, Diglyceriden, Triglyceriden, Estern von Monoglyceriden, Estern von Diglyceriden und Kombinationen davon.

5. Belüftete Lebensmittelzusammensetzung nach einem der Ansprüche 1 bis 4, wobei das hochschmelzende Fett auf einem Niveau zwischen 10 und 45 Gew.-% des Gesamtfetts vorhanden ist, das mittelschmelzende Fett auf einem Niveau zwischen 35 und 75 Gew.-% des Gesamtfetts vorhanden ist und das niedrigschmelzende Fett auf einem Niveau zwischen 10 und 35 Gew.-% des Gesamtfetts vorhanden ist.

6. Belüftete Lebensmittelzusammensetzung nach einem der Ansprüche 1 bis 5, wobei das hochschmelzende Fett aus der Gruppe ausgewählt ist, bestehend aus Stearin oder mittleren Anteilen von Sheabutter, Kokumbutter, Salbutter, Kakaobutter, Palmöl, Algenöl und Kombinationen davon; wobei das mittelschmelzende Fett aus der Gruppe ausgewählt ist, bestehend aus Softolein-Anteilen von Palmöl, Sheabutter, Kokumbutter, Salbutter, Kakaobutter und Algenöl und Kombinationen davon; und das niedrigschmelzende Fett aus der Gruppe ausgewählt ist, bestehend aus Sonnenblumenöl mit hohem Ölgehalt, Saflöröl mit hohem Ölgehalt, Sojaöl mit hohem Ölgehalt, Rapsöl mit hohem Ölgehalt, wie Canola-Öl mit hohem Ölgehalt, Algenöl mit hohem Ölgehalt, Olivenöl, Macadamianussöl, Haselnussöl, Avocadoöl, Sonnenblumenöl, Rapsöl, Sojaöl, Traubenöl, Baumwollsamenöl, Maisöl und Kombinationen davon.

7. Belüftete Lebensmittelzusammensetzung nach einem der Ansprüche 1 bis 6, zusätzlich umfassend Einschlüsse mit einem durchschnittlichen Durchmesser von mehr als 2 mm.

8. Zusammensetzung nach einem der Ansprüche 1 bis 7, wobei die Zusammensetzung eine Konditorwarenfüllung ist.

9. Verfahren zum Herstellen einer belüfteten Lebensmittelzusammensetzung nach einem der Ansprüche 1 bis 8, das Verfahren umfassend die Schritte:

   Bereitstellen einer Zusammensetzung, umfassend Nicht-Fett-Feststoffe und das Fett, wobei die kontinuierliche Fettphase, die innerhalb der Zusammensetzung enthalten ist, flüssig ist;
   Durchführenlassen eines ersten Kristallisationsereignisses von der Zusammensetzung;
   Belüften der Zusammensetzung;
   und Steuern der Temperatur der belüfteten Zusammensetzung, um ein zweites Kristallisationsereignis in der Zusammensetzung zu ermöglichen.

10. Verfahren nach Anspruch 9, wobei der feste Fettgehalt der Zusammensetzung während der Belüftung zwischen 5 und 20 % des Gesamtfetts beträgt.

11. Verfahren nach Anspruch 9 oder 10, wobei das erste Kristallisationsereignis bei einer Zusammensetzungstemperatur zwischen 16 und 24 °C durchgeführt wird.

12. Verfahren nach einem der Ansprüche 9 bis 11, wobei das zweite Kristallisationsereignis bei einer Zusammensetzungstemperatur mindestens 5 °C niedriger als die Zusammensetzungstemperatur des ersten Kristallisationsereignisses durchgeführt wird.

13. Verfahren nach einem der Ansprüche 9 bis 12, wobei der feste Fettgehalt der Zusammensetzung um mindestens 10 % des Gesamtfetts während des zweiten Kristallisationsereignisses zunimmt.

14. Verfahren nach einem der Ansprüche 9 bis 13, wobei der Belüftungsschritt ein mechanisches Umrühren umfasst.

15. Verfahren nach einem der Ansprüche 9 bis 14, wobei Einschlüsse mit einem durchschnittlichen Durchmesser von mehr als 2 mm in die belüftete Zusammensetzung vor dem zweiten Kristallisationsereignis gemischt werden.

**Revendications**

1. Composition alimentaire aérée ayant une phase grasse continue, la composition comprenant

   entre 20 et 60 % en poids de matière grasse et entre 40 et 80 % en poids de matières solides exemptes de matières grasses ayant une distribution granulométrique D90 inférieure à 250 $\mu$m, telle que mesurée par diffusion de lumière laser, la matière grasse comprenant une matière grasse à fusion élevée, une matière grasse à fusion moyenne et une matière grasse à faible fusion,
   dans laquelle la composition aérée comprend, sur une base de matière grasse totale,
   moins de 50 % en poids d'acides gras saturés, entre 9 et 60 % en poids d'acide gras mono-insaturé, et moins de 30 % en poids d'acide gras polyinsaturé, et
   dans lequel la matière grasse à fusion élevée a un point de fusion entre 35 °C et 80 °C, la matière grasse à fusion moyenne a un point de fusion entre 15 °C et 30 °C et la matière grasse à fusion basse a un point de fusion entre - 50 °C et 5 °C et la composition alimentaire aérée est préparée par un procédé comprenant les étapes consistant à :

fournir une composition comprenant les matières solides exemptes de matières grasses et la matière grasse, la phase grasse continue comprise dans la composition étant liquide ;
laisser la composition réaliser un premier événement de cristallisation ;
aérer la composition ;
et commander la température de la composition aérée pour permettre un second événement de cristallisation dans la composition.

2. Composition alimentaire aérée selon la revendication 1, dans laquelle la matière grasse n'est pas interestérifiée.

3. Composition alimentaire aérée selon la revendication 1 ou la revendication 2, dans laquelle la matière grasse a une teneur en matières grasses solides entre 5 et 45 % à 20 °C et une teneur en matières grasses solides à 10 °C augmentée entre 10 et 20 % de la valeur à 20 °C.

4. Composition alimentaire aérée selon l'une quelconque des revendications 1 à 3, dans laquelle, dans des conditions auxquelles la phase grasse a une teneur en matières grasses solides entre 0,1 et 80 %, la composition comprend des bulles de gaz ayant au moins 50 % de leur surface occupée par des cristaux, les cristaux comprenant un glycéride choisi dans le groupe constitué de monoglycérides, diglycérides, triglycérides, esters de monoglycérides, esters de diglycérides et leurs combinaisons.

5. Composition alimentaire aérée selon l'une quelconque des revendications 1 à 4, dans laquelle la matière grasse à fusion élevée est présente à un taux compris entre 10 et 45 % en poids de la matière grasse totale, la matière grasse à fusion moyenne est présente à un taux compris entre 35 et 75 % en poids de la matière grasse totale et la matière grasse à faible fusion est présente à un taux compris entre 10 et 35 % en poids de la matière grasse totale.

6. Composition alimentaire aérée selon l'une quelconque des revendications 1 à 5, dans laquelle la matière grasse à fusion élevée est choisie dans le groupe constitué de stéarine ou fractions moyennes de beurre de karité, beurre de kokum, beurre de sal, beurre de cacao, huile de palme, huile d'algue et leurs combinaisons ; la matière grasse à fusion moyenne est choisie dans le groupe constitué des fractions d'oléine douce d'huile de palme, beurre de karité, beurre de kokum, beurre de sal, beurre de cacao et huile d'algue et leurs combinaisons ; et la matière grasse à faible fusion est choisie dans le groupe constitué d'huile de tournesol à haute teneur en acide oléique, huile de carthame à haute teneur en acide oléique, huile de soja à haute teneur en acide oléique, huile de colza à haute teneur en acide oléique telle que l'huile de canola à haute teneur en acide oléique, huile d'algue à haute teneur en acide oléique, huile d'olive, huile de noix de macadamia, huile de noisette, huile d'avocat, huile de tournesol, huile de colza, huile de soja, huile de pépins de raisin, huile de noyaux de coton, huile de maïs et leurs combinaisons.

7. Composition alimentaire aérée selon l'une quelconque des revendications 1 à 6 comprenant en outre des inclusions ayant un diamètre moyen supérieur à 2 mm.

8. Composition alimentaire aérée selon l'une quelconque des revendications 1 à 7, dans laquelle la composition est une garniture de confiserie.

9. Procédé de fabrication d'une composition alimentaire aérée selon l'une quelconque des revendications 1 à 8, le procédé comprenant les étapes consistant à ;

fournir une composition comprenant les matières solides exemptes de matières grasses et la matière grasse, la phase grasse continue comprise dans la composition étant liquide ;
laisser la composition réaliser un premier événement de cristallisation ;
aérer la composition ;
et commander la température de la composition aérée pour permettre un second événement de cristallisation dans la composition.

10. Procédé selon la revendication 9, dans lequel la teneur en matières grasses solides de la composition pendant l'aération est comprise entre 5 et 20 % de la matière grasse totale.

11. Procédé selon la revendication 9 ou la revendication 10, dans lequel le premier événement de cristallisation est réalisé à une température de composition comprise entre 16 et 24 °C.

**12.** Procédé selon l'une quelconque des revendications 9 à 11, dans lequel le second événement de cristallisation est réalisé à une température de composition d'au moins 5 °C inférieure à la température de composition du premier événement de cristallisation.

**13.** Procédé selon l'une quelconque des revendications 9 à 12, dans lequel la teneur en matières grasses solides de la composition augmente d'au moins 10 % de la matière grasse totale pendant le second événement de cristallisation.

**14.** Procédé selon l'une quelconque des revendications 9 à 13, dans lequel l'étape d'aération comprend une agitation mécanique.

**15.** Procédé selon l'une quelconque des revendications 9 à 14, dans lequel des inclusions ayant un diamètre moyen supérieur à 2 mm sont mélangées dans la composition aérée avant le second événement de cristallisation.

**Fig. 1**

**Fig. 2**

**Fig. 3**

**Fig. 4**

Fig. 5

**EP 3 515 199 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2082313 A

- WO 2017055101 A1

### Non-patent literature cited in the description

- **K.F. TIEFENBACHER.** Encyclopaedia of Food Science, Food Technology and Nutrition. Academic Press Ltd, 1993, 417-420